# FASCICULE DE BREVET EUROPEEN

(11) **EP 2 933 142 B1**
(45) Date de publication et mention de la délivrance du brevet: **07.11.2018**
(21) Numéro de dépôt: 15163401.1
(22) Date de dépôt: 13.04.2015
(51) Int. Cl.: B60Q 1/076

(54) **PIÈCE DE DISPOSITIF LUMINEUX DE VÉHICULE AUTOMOBILE COMPRENANT UN ÉLÉMENT D'APPUI ET UN AMORTISSEUR**
TEIL EINER LEUCHTVORRICHTUNG FÜR KRAFTFAHRZEUGE, DAS EIN HALTE- UND EIN STOSSDÄMPFUNGSELEMENT UMFASST
PART OF A LUMINOUS DEVICE OF A MOTOR VEHICLE INCLUDING A SUPPORT ELEMENT AND A DAMPER

(30) Priorité: 18.04.2014 FR 1453565
(43) Date de publication de la demande: 21.10.2015
(73) Titulaire: VALEO VISION, 93012 Bobigny Cedex (FR)
(72) Inventeur: Sanchez, Vanesa, 92270 Bois Colombes (FR); Sommerschuh, Stephan, 75013 Paris (FR); Roucoules, Christine, 95170 Deuil La Barre (FR); Puente, Jean-Claude, 93190 Livry Gargan (FR)

(56) Documents cités:
- EP-A1- 2 444 723
- EP-A2- 2 298 602
- FR-A1- 2 925 419
- US-A1- 2003 117 810

## Description

La présente invention concerne une pièce de dispositif lumineux de véhicule, un ensemble contenant cette pièce, ou un dispositif lumineux de véhicule contenant cette pièce ou cet ensemble.

Les dispositifs lumineux de véhicules peuvent être amenés à comprendre des pièces qui, une fois fixées, présentent un important porte-à-faux ou supporte une charge conséquente. Il s'ensuit que lorsqu'ils sont montés sur un véhicule et que celui-ci subit d'importantes variations de charge, les vibrations engendrées sur la pièce et ses moyens de fixation peuvent entrainer la rupture de ceux-ci.

C'est par exemple le cas pour des platines supportant un ou plusieurs modules optiques. Ces modules sont assez lourds surtout s'ils comprennent des lentilles. Les platines sont en général supportées par des points de fixation, souvent trois. Les vibration du véhicule sont transmises à ces points de fixation et les endommagent.

Il a été proposé d'adjoindre à ces pièces un élément permettant à ladite pièce d'être en appui sur un support, tel qu'un chariot à base plate, celui-ci pouvant glisser dans une glissière. Il est cependant nécessaire d'avoir un jeu entre le chariot et la glissière pour que le mouvement puisse se faire. L'inconvénient de ces dispositifs est que des à-coups ont ainsi lieu dans la glissière. Il s'ensuit des fortes vibrations dans la pièce qui peuvent la dégrader elle-même et ses points de fixation. Elles peuvent également dégrader les éléments portés par cette pièce, par exemple un module optique porté par une platine.

Une pièce de dispositif lumineux selon le préambule de la revendication est connue de EP 2 444 723.

L'invention vise à proposer une pièce de dispositif lumineux de véhicule visant à diminuer l'impact des variations de charge subies par cette pièce.

Un objet de l'invention est donc une pièce de dispositif lumineux de véhicule avec les caractéristiques de la revendication 1, comprenant notamment :
- un corps de pièce comprenant au moins un moyen de fixation de ladite pièce,
- un élément d'appui solidaire dudit corps, distinct du moyen de, et comprenant une surface d'appui, ladite pièce étant destinée à s'appuyer sur ladite surface d'appui lorsqu'elle est fixée par son moyen de fixation, et ledit élément d'appui et ledit corps étant agencés de manière à ce que ladite surface d'appui soit mobile par rapport audit corps,
- un amortisseur agencé de manière à pouvoir amortir un mouvement dudit corps, ce mouvement dudit corps tendant à le rapprocher ou à l'écarter de ladite surface d'appui.

Ainsi une fois le dispositif lumineux monté dans le véhicule, ladite pièce sera en appui sur la surface d'appui permettant de supporter son poids et le porte-à-faux. Lorsque le véhicule subira des variations de charge, par exemple en cas de freinage, le corps aura tendance à se rapprocher de la surface d'appui, ou, par exemple en cas d'accélération, à s'en écarter. L'amortisseur amortira ces variations de sorte que les variations subies par la surface d'appui seront moindre. Ainsi la pièce, ses fixations et les éléments qui y sont reliés auront une durée de vie plus longue.

Selon une réalisation de l'invention, ladite pièce comprend un moyen de guidage apte à guider le déplacement de ladite pièce selon au moins une direction privilégiée. Cela permet de mettre un point d'appui non fixé et de canaliser un déplacement de la pièce dans une direction, par exemple moins gênante pour la fonction lumineuse du dispositif comprenant la pièce.

Par exemple, quand le dispositif est un feu stop surélevé, encore appelé CHMSL (pour le terme anglais « Centered High Mounted Stop Light »), le boîtier de celui-ci ou ses écrans optiques sont disposés transversalement par rapport à l'axe longitudinal du véhicule et peuvent être assez long. Leurs extrémités peuvent être amenées à vibrer, par exemple par rapport au milieu, vers à l'arrière et l'avant du véhicule. Il peut être utile de guider ce déplacement selon une direction longitudinale du véhicule, pour que la fonction de signalisation reste dans une orientation appropriée.

Dans le cas où le dispositif est un projecteur et le corps de pièce est la platine de support du module optique de ce corps de pièce, le moyen de guidage est apte à guider le déplacement de la pièce selon une direction longitudinale. Dans ce cas, la direction longitudinale correspond à un déplacement de l'arrière du projecteur vers l'avant. Cela permet un basculement de la platine vers le haut ou vers la bas, donc le réglage horizontal du module optique.

La pièce selon l'invention peut également comprendre une ou plusieurs des caractéristiques ci-après :
- l'élément d'appui et la surface d'appui sont agencés de manière à ce que la pièce puisse se déplacer solidairement avec la surface d'appui selon la direction privilégiée; cela favorise le glissement de la surface d'appui lorsque la pièce se déplace ;
- ledit amortisseur est solidaire d'un côté à la surface d'appui et de l'autre audit corps de pièce ; cette disposition est plus simple à mettre en oeuvre pour amortir le mouvement dudit corps de pièce ;
- le moyen élastique est précontraint ; cela permet de maintenir un contact permanent entre la surface d'appui et son support ; de plus quand bien même une variation de charge serait suffisante pour que la surface d'appui perde le contact avec le support, ce mouvement sera néanmoins absorbé et les vibrations seront moindres ;

- le moyen élastique supplémentaire est un ressort ;
- le moyen élastique est un ressort ; ce moyen est plus facile à mettre en oeuvre ; on peut également utiliser tout autre moyen élastique comme par exemple de la mousse ou un caoutchouc ;
- l'amortisseur comprend deux éléments glissant l'un dans l'autre, l'un solidaire du corps et l'autre solidaire de l'élément d'appui, le moyen élastique étant agencé entre deux parties de ces éléments de manière à se déformer par le déplacement de ces éléments l'un par rapport à l'autre, lorsque ledit corps tend à se rapprocher ou s'écarter de ladite surface d'appui ; cet agencement est simple à mettre en oeuvre pour avoir un bon amortissement de ce rapprochement ou de cet écartement, et donc des variations de charge sur la pièce ;
- les éléments glissants peuvent être un corps de cylindre et un piston à l'intérieur du corps de cylindre, le moyen élastique pouvant être un ressort ou un gaz prisonnier dans le corps de cylindre, entre le fond de ce dernier et le piston ; on peut également envisager un système hydropneumatique permettant d'amortir le déplacement de ces éléments l'un par rapport à l'autre ;
- ledit élément d'appui comprend l'arbre, ce dernier étant relié à ladite surface d'appui et au corps de pièce ; ainsi l'élément d'appui et l'amortisseur sont réalisés de manière compacte avec un arbre commun ;
- l'orifice est formé sur une partie du corps de pièce ; dans ce cas il y a également une économie du nombre de pièces, le corps de pièce formant une partie de l'amortisseur ;
- la pièce comprend un palier fixé sur l'arbre et sur lequel le moyen élastique prend appui; c'est un moyen simple de réalisation ; dans le cas où le moyen élastique est un ressort à spires, celui-ci peut être agencé autour de cet arbre, améliorant facilité de réalisation et compacité ;
- l'élément d'appui comprend une portion transversale portant la surface d'appui et fixée à une extrémité de l'arbre, la portion transversale dépassant de chaque côté de l'arbre de manière à être apte à coopérer avec un rail ou une glissière ;
- la portion transversale est cylindrique, l'axe du cylindre étant perpendiculaire à celui de l'arbre ; ainsi cela améliore le glissement de la surface d'appui, la dimension de la surface de contact dans le sens de la direction privilégiée étant réduite ;
- la portion transversale est cylindrique et présente une section ovale, elliptique ou circulaire, ainsi cela améliore davantage le glissement de la surface d'appui ; ces exemples ne sont pas limitatifs et plus généralement la portion transversale peut présenter une section telle que la surface d'appui est tangente à un plan selon une ligne ;
- la portion transversale comprend deux éléments glissant l'un dans l'autre, l'un relié à l'arbre et l'autre étant libre, un moyen élastique supplémentaire étant agencé entre deux parties de ces éléments de manière à se déformer par le déplacement de ces éléments l'un par rapport à l'autre ;
- la portion transversale comprend :
   - un manchon présentant un orifice cylindrique transversal,
   - un coulisseau coulissant à l'intérieur dudit manchon,
   - une tête fixé à l'extrémité du coulisseau et à l'extérieur du manchon,
   - un moyen élastique supplémentaire relié d'un côté à ladite tête et de l'autre au manchon ;
- la tête est une calotte sphérique ; cela favorise son guidage contre les moyens de guidage complémentaires ;
- la tête ou/et la surface d'appui sont dans un matériau à faible coefficient de frottement, par exemple du polytétrafluoroéthylène (PTFE),
- le corps de pièce est un écran fait d'un matériau transparent et/ou translucide ; on peut ainsi appliquer l'invention à des pièces optiques longues, telles que celles présentes dans les feux stop surélevés ;
- le corps de pièce est la platine de support d'au moins un module optique.

D'une manière générale, la pièce selon l'invention peut comprendre un amortisseur supplémentaire agencé de manière à pouvoir amortir un autre mouvement dudit corps, selon une direction différente de celle du mouvement dudit corps tendant à le rapprocher ou à l'écarter de ladite surface d'appui. Cet amortisseur supplémentaire peut comprendre au moins un moyen élastique supplémentaire apte à se déformer lorsque ledit corps se déplace selon ledit autre mouvement;

L'invention couvre également un ensemble comprenant un module optique monté sur une pièce selon l'invention, ledit corps de pièce étant la platine de support du module optique.

L'invention couvre également un Ensemble comprenant au moins un module optique monté sur une pièce selon l'invention, le corps de pièce étant la platine de support du module optique, dans lequel :
- l'élément solidaire dudit corps de pièce et comprenant un orifice, est un palier de la platine,
- l'arbre présente une première extrémité reliée à la surface d'appui et une seconde extrémité, les extrémités étant situées de part et d'autre de l'orifice,
- ledit module optique est monté en rotation sur la seconde extrémité dudit arbre, de manière à ce que le module optique puisse tourner autour dudit arbre par rapport à la platine.

Ainsi de manière compacte, l'arbre de l'élément d'appui est également l'arbre de rotation du module optique. Ceci est particulièrement avantageux lorsque le module optique est apte à tourner horizontalement, par exemple pour suivre les courbes des virages.

L'invention couvre également un dispositif lumineux comprenant :
- un boîtier fermé d'une glace transparente, et définissant ainsi une chambre,
- une pièce ou un ensemble selon l'invention, à l'intérieur de ladite chambre, ladite pièce comprenant un moyen de guidage apte à guider le déplacement de ladite pièce selon au moins une direction privilégiée,
   dans lequel le boîtier comprend un moyen de guidage complémentaire du moyen de guidage de ladite pièce, et agencé de manière à permettre le déplacement de ladite pièce selon au moins la direction privilégiée.

Cela permet de guider plus facilement la pièce dans le dispositif lumineux selon la direction privilégiée.

Selon une réalisation simple à mettre en oeuvre, le moyen de guidage complémentaire est une glissière à l'intérieur de laquelle le moyen de guidage de ladite pièce est monté et y est apte à coulisser selon la direction privilégiée.

Ces moyens de guidage peuvent être deux éléments en forme de « L » et fixés à une paroi du boîtier. Une première branche du « L » s'étend depuis la paroi du boîtier, l'autre depuis cette première branche. Cela est simple à réaliser. Par exemple, lorsque la glissière est au fond, le « L » s'étend à l'envers, depuis le fond du boîtier, la branche verticale s'étendant depuis ce fond.

Les moyens de guidage peuvent être formés venus de matière en une seule pièce avec le boîtier.

Le dispositif lumineux peut être un feu stop surélevé comprenant un écran, le corps de pièce étant cet écran, l'écran étant fait d'un matériau transparent et/ou translucide.

L'invention couvre également une pièce selon l'invention, dans laquelle ledit corps de pièce est un boîtier d'un dispositif lumineux de véhicule, notamment un feu stop surélevé, le boîtier étant destiné à être fermé d'une glace transparente pour définir ainsi une chambre, ledit élément d'appui étant à l'extérieur de la chambre. Cela permet d'avoir un point d'appui sur un élément du véhicule une fois le boîtier monté dans ce véhicule. L'invention couvre également un dispositif lumineux comprenant une telle pièce, ce dispositif lumineux étant par exemple un feu stop surélevé. Cela est avantageux, car un feu stop surélevé, du fait de sa longueur peut également subir de fortes vibrations par rapport à la carrosserie du véhicule.

L'invention couvre également un dispositif lumineux comprenant :
- un boîtier,
- une platine de support de module optique,
- une pièce selon l'invention, dans laquelle ledit corps de pièce est une tige de réglage comprenant à une extrémité un point de fixation à ladite platine et à l'autre un point de fixation au boîtier du dispositif lumineux,
l'élément d'appui étant solidaire de ladite tige de réglage et la surface d'appui s'appuyant directement ou indirectement contre une paroi du boîtier.

Cela permet également d'amortir les vibrations sur cette tige, notamment lorsque celle-ci est longue et présente donc un important porte-à-faux.

L'invention sera mieux comprise à la lecture de la description qui va suivre, donnée uniquement à titre d'exemple et faite en se référant aux dessins dans lesquels :
- la figure 1 est une vue en perspective d'une pièce selon l'invention, selon un premier état,
- la figure 2, représente une vue de face et agrandie d'une partie de la figure 1, en particulier de l'amortisseur,
- la figure 3 est une vue en perspective de la pièce selon l'invention, selon un deuxième état,
- les figure 4 et 5 représentent respectivement une vue de côté des figures 1 et 3,
- la figure 6 est une vue en perspective de la pièce selon l'invention, selon un troisième état,
- la figure 7, représente une vue de face et agrandie d'une partie de la figure 6, en particulier de l'amortisseur,
- la figure 8 représente une réalisation de l'amortisseur selon l'invention,
- la figure 9 représente un mode de réalisation selon l'invention vu de côté,
- la figure 10 est une vue de face du mode de réalisation illustré en figure 8,
- la figure 11 représente un autre mode de réalisation selon l'invention,
- la figure 12 représente encore un autre mode de réalisation selon l'invention,
- la figure 13 représente encore un autre mode de réalisation selon l'invention.

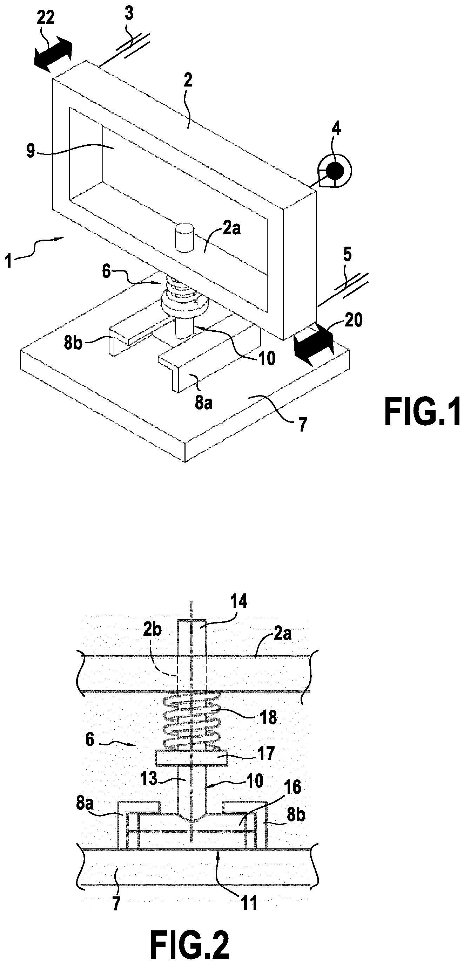

La figure 1 et la figure 2 illustrent une pièce 1 de dispositif lumineux de véhicule selon l'invention, comprenant :
- un corps de pièce 2 comprenant trois moyens de fixation 3, 4 et 5, de ladite pièce,
- un élément d'appui 10 solidaire dudit corps, distinct des trois moyens de fixation, et comprenant une surface d'appui 11, ladite pièce 1 étant destinée à s'appuyer sur ladite surface d'appui 11 lorsqu'elle est fixée par ses moyens de fixation 3, 4, 5, et ledit élément d'appui et ledit corps étant agencés de manière à ce que ladite surface d'appui soit mobile par rapport audit corps,
- un amortisseur 6 agencé de manière à pouvoir amortir un mouvement dudit corps, ce mouvement dudit corps 2 tendant à le rapprocher ou à l'écarter de ladite surface d'appui 11.

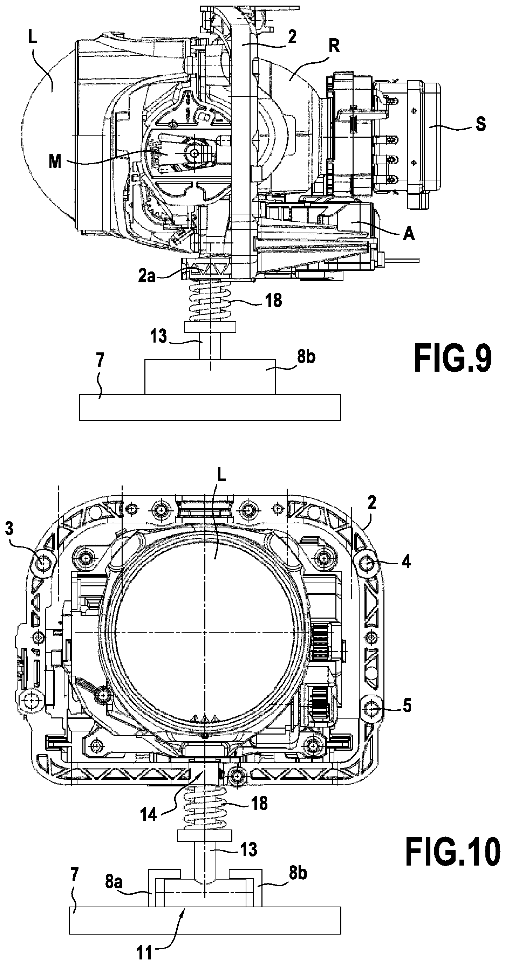

Dans l'exemple illustré, le corps de pièce est une platine 2 destinée à recevoir un module optique. Elle a notamment la forme d'un cadre, le module optique étant fixé au cadre notamment en passant au travers de celui-ci par l'ouverture 9, comme illustré en figures 9 et 10. Comme il sera exposé plus loin dans le texte, ce mode de réalisation n'est pas limitatif.

La pièce 1 comprend un moyen de guidage 16 apte à guider le déplacement de la pièce de l'invention selon au moins une direction privilégiée. Ici, il s'agit de la direction longitudinale parallèle à celle du véhicule lorsque la pièce est montée dans le dispositif lumineux, lui-même monté dans le véhicule.

La pièce 1 est comprise ici dans un dispositif lumineux comprenant un boîtier fermé d'une glace transparente, non représentée, et définissant ainsi une chambre. La surface d'appui 11 est en contact avec la paroi du fond du boîtier 7. La pièce 1 s'appuie donc sur le fond du boîtier avec la surface d'appui via l'élément d'appui 10.

Le fond du boîtier 7 comprend, à l'intérieur de la chambre, un moyen de guidage complémentaire 8a, 8b du moyen de guidage 16 de ladite pièce 1, et agencé de manière à permettre le déplacement de ladite pièce selon la direction privilégiée. Dans cet exemple, le moyen de guidage complémentaire est formé par deux rails 8a et 8b formant une glissière, à l'intérieur de laquelle l'élément d'appui peut coulisser.

L'élément d'appui 10 comprend un arbre 13 solidaire d'un côté de la platine 2 et de l'autre à une barre transversale 16. La barre transversale 16 porte la surface d'appui 11 et dépasse de chaque côté de l'arbre, formant ainsi un « T » avec l'arbre. La barre transversale forme ledit moyen de guidage 16. Les moyens de guidage complémentaires sont formés par des rails 8a ou 8b.

Chaque côté de la barre transversale coopère avec un rail 8a ou 8b, la barre transversale 16 se situant entre ces rails. Les rails peuvent être en forme de « L », les branches verticales bloquant le déplacement de la barre transversale 16 transversalement et les branches horizontales bloquant le déplacement de la barre transversale 16 verticalement. Ainsi la barre transversale 16 glisse sur une direction privilégiée vers l'avant.

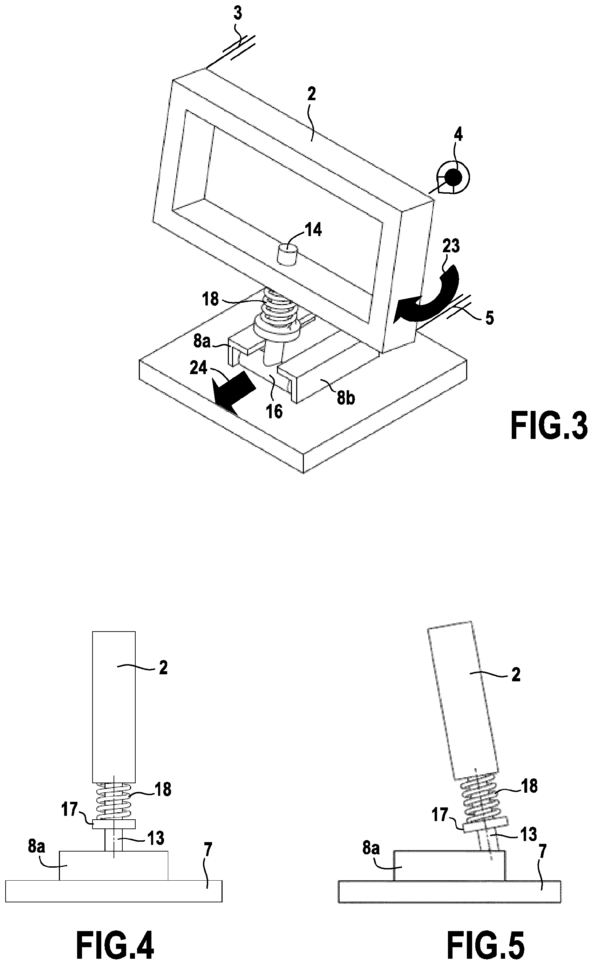

La platine comporte en effet trois points de fixation : un point fixe 4, et deux points mobiles 3 et 5. L'agencement de fixation en trois points d'un platine est connu. Le déplacement 20 du point mobile bas 5, sous le point fixe 4, va créer un basculement du bas 2a de la platine vers l'avant du dispositif lumineux, comme illustré en figure 3 et 5. Ceci entraine une rotation horizontale 23 de la platine 2, comme illustré en figure 5. Ceci est notamment effectué lors d'un réglage de la hauteur de coupure, par exemple quand le module optique génère un faisceau de croisement. La conception selon l'invention permet le glissement de la surface d'appui 11, permettant ainsi d'avoir un appui supplémentaire sans bloquer ce réglage, tout en facilitant son guidage selon une direction privilégiée 24 correspondant à la direction de déplacement du bas de la platine.

De plus la présence de l'amortisseur 6 va permettre d'absorber les variations de charge sur la platine 2 et son élément d'appui 10. Celles-ci sont importantes en raison du poids d'un module optique. En effet, comme illustré en figures 9 et 10, ce dernier peut être assez lourd. Dans l'exemple illustré, il comprend un réflecteur R et une lentille L, reliée à lui par un porte-lentille. Il peut comprendre également des moteurs pour actionner des caches ou le mouvement du module autour d'un axe vertical. On voit ici que les vibrations verticales entraîneront des variations de charge importantes sur le module, sur la platine 2, et sur la surface d'appui 11. L'amortisseur permettra d'amortir ces variations de charge.

De plus, la barre transversale 16 doit présenter un jeu avec les portions horizontales des rails 8a et 8b, pour pouvoir glisser. Les mouvements du module optique en raison de freinage ou de chaussée déformée, pourraient entrainer des déplacements et à-coups de la barre transversale 16 contre ces portions horizontales ou contre le fond du boîtier. L'amortisseur permet d'amortir ces à-coups.

Il peut être avantageux que l'amortisseur comprenne un moyen élastique 18 apte à se déformer lorsque la platine 2 tend à se rapprocher ou s'écarter de ladite surface d'appui 11 sous l'effet notamment de ces vibrations.

Le moyen élastique 18 peut être monté précontraint. Ainsi, il maintiendra un contact permanent entre la surface d'appui 11 et le fond de boîtier 7 malgré certaines vibrations. Quand bien même la variation de charge serait suffisante pour que la surface d'appui 11 perde le contact avec le fond de boîtier 7, ce mouvement sera néanmoins absorbé et les vibrations seront moindres.

Dans l'exemple illustré le moyen élastique est un ressort à spires 18.

L'amortisseur 6 comprend deux éléments glissant l'un dans l'autre. Le premier est une branche transversale basse 2a de la platine 2 et est donc solidaire de la platine. Le second est l'arbre 13 de l'élément d'appui 10. Le ressort est agencé entre cette branche transversale basse 2a et un palier 17 porté par cet arbre 13. Le ressort peut ainsi se comprimer ou se détendre par le déplacement de l'arbre par rapport à la platine 2.

Selon le mode de réalisation illustré la branche transversale basse 2a comprend un orifice 2b, l'arbre 13 traversant ledit orifice 2b. Ainsi la branche transversale basse 2a de la platine, l'arbre 13 avec son palier 17, et le ressort 18 forment l'amortisseur 6. L'élément d'appui 10 et l'amortisseur 6 ont ainsi des pièces communes, réduisant ainsi l'encombrement et le nombre de pièces. Pour gagner en compacité, les spires du ressort 18 entourent l'arbre 13. De plus, l'arbre 13 permet également de guider le ressort à spires 18 pour qu'il puisse se comprimer de manière rectiligne.

De manière simple, le ressort est solidaire d'un côté à la surface d'appui par appui d'un côté sur le pallier et de l'autre par appui contre la branche transversale basse 2a.

Comme on peut le voir en figure 5, lors du déplacement du bas de la platine 2 vers l'avant, l'arbre 13 va glisser au travers de la branche transversale basse 2a de la platine. La portion de l'arbre sous cette branche 2a augmente alors ; la portion 14 située au-dessus diminue. Cela favorise le maintien du contact entre la surface d'appui 11 et le fond de boîtier 7. Le ressort 18 étant précontraint, il renforce ce maintien en contact.

La barre transversale 16 de l'élément d'appui est dans cet exemple cylindrique, avec une directrice circulaire. L'axe du cylindre, et donc ses génératrices, étant perpendiculaire à l'axe de l'arbre 13. Ces deux axes sont représentés en pointillés trait long-trait plein sur la figure 2. De ce fait, la barre transversale n'est en contact avec le fond de boîtier 7 que selon une ligne, qui plus est transversale par rapport à la direction privilégiée 24. Le glissement est ainsi facilité.

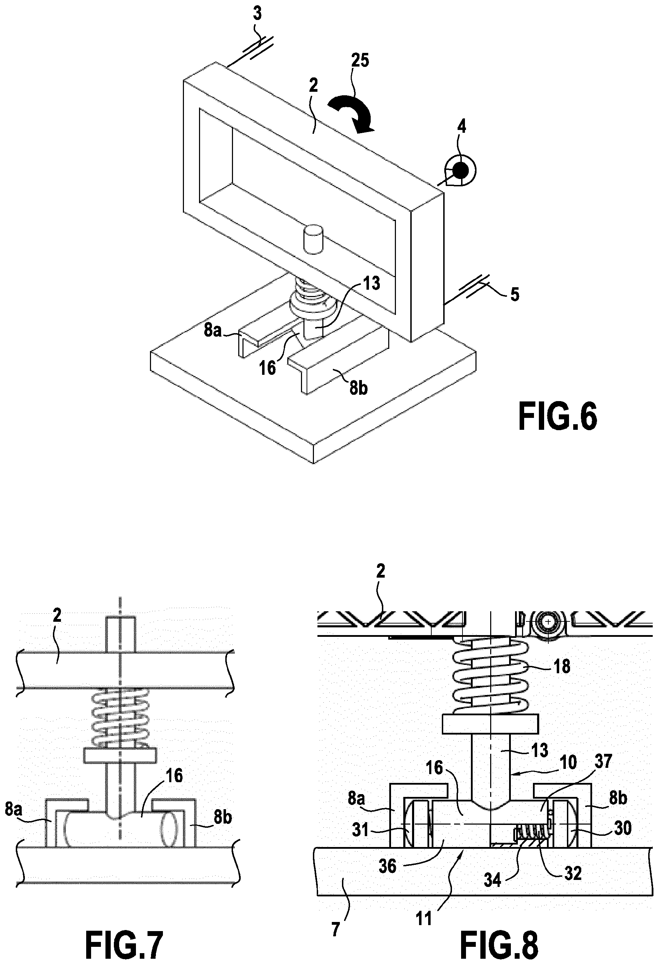

Comme on peut le voir en figures 6 et 7, l'actionnement du point mobile haut 3 de la platine 2, selon la direction avant-arrière 22, va entrainer le basculement de la branche verticale correspondante de la platine 2, entrainant ainsi une rotation horizontale 25 de la platine, à savoir une rotation autour d'un axe vertical passant par le point de fixation fixe 4 et l'autre point de fixation 5. Un tel actionnement est effectué pour ajuster le faisceau lumineux à droite ou à gauche. Comme un jeu est prévu entre les extrémités libres de la barre transversale 16 et les rails 8a et 8b, cette barre risque de tourner également et de s'orienter d'une façon d'une part moins optimale pour le glissement, et d'autre part en augmentant le jeu entre ces extrémités libres et les rails. Ce décalage est illustré sur les figures 6 et 7.

Pour améliorer cela, on peut réaliser la barre transversale 16 avec deux éléments glissant l'un 32 dans l'autre 37, un moyen élastique supplémentaire 34 étant agencé entre deux parties de ces éléments 32 et 37 de manière à se déformer par le déplacement de ces éléments l'un par rapport à l'autre.

La figure 8 détaille cette amélioration. La barre transversale 16 comprend deux manchons 36, 37, un de chaque côté de l'arbre 13, chaque manchon présentant un orifice cylindrique transversal, ainsi que deux coulisseaux 32, chacun coulissant à l'intérieur d'un manchon. Chaque coulisseau 32 porte une tête 30, 31, à l'extérieur du manchon. Chaque tête 30 et 31 coopère avec l'un des rails, respectivement 8a et 8b. Un moyen élastique supplémentaire 34, dans cet exemple un ressort à spires supplémentaire, est relié d'un côté à ladite tête 30 et de l'autre au manchon 37. Bien que non illustré, le même moyen élastique est pourvu pour le manchon 36 et la tête 31.

Les ressorts à spires supplémentaires 34, les manchons 36, 37 et leurs têtes 30, 31, vont former des amortisseurs supplémentaires permettant d'amortir des variations de charge non plus du haut vers le bas, comme pour ledit amortisseur 18, mais de droite à gauche. Cela amortira ou absorbera ainsi les vibrations latérales.

De plus, les ressorts supplémentaires sont préférentiellement précontraints et vont ainsi permettre de maintenir le contact entre les têtes 30, 31 et les parois verticales des rails 8b, 8a. De plus, en maintenant ce contact cela permet à la barre transversale 16 d'éviter de tourner. Ainsi cette barre 16 restera orientée transversalement, préférentiellement perpendiculairement, à la direction privilégiée 24.

Le coulisseau 32 a ici la forme d'une tige, le ressort supplémentaire 34 étant enroulé autour de celui-ci à l'intérieur du manchon 37. La barre transversale 16 peut donc être réalisée de manière assez compacte. Cela permet également d'avoir des rails 8a et 8b d'une hauteur limitée.

Ce type d'amortisseur et d'élément d'appui peut s'appliquer à différentes pièces de dispositifs lumineux.

Comme exposé ci-avant et illustré en détails en figures 9 et 10, il peut s'appliquer à une platine 2 support d'un module optique. Le module optique est monté sur une pièce selon l'invention, comprenant la platine de support 2 du module et l'élément d'appui 10.

Dans ces figures 9 et 10, le module optique est un module elliptique comprenant un réflecteur elliptique R relié par un porte-lentille à une lentille convergente épaisse L. Ici une source lumineuse S est montée sur le réflecteur. Il comprend également un mécanisme d'actionnement M de cache (non représenté), incluant le cache et un moteur. Il y peut y avoir, comme dans cet exemple, un actionneur A permettant d'actionner le module pour le faire tourner par rapport à la platine 2, et réaliser ainsi une fonction de suivi de virage. On voit qu'un tel module est lourd. L'invention est particulièrement utile pour amortir les variations de charge qu'il subira.

D'une manière générale, l'invention est encore davantage utile si cette platine porte plusieurs modules. Il est d'ailleurs possible d'utiliser plusieurs éléments d'appui et amortisseurs selon l'invention.

Elle est également utile dans le cadre de modules optiques à LED, ou diode électroluminescente. Les LED pour l'éclairage étant montées sur des radiateurs qui ajoutent encore au poids du module optique.

En absorbant les vibrations, outre que l'invention permet de prolonger la durée de vie des moyens de fixation 3, 4 et 5 de la platine, elle permet également d'améliorer la stabilité de la coupure dans le faisceau.

Comme illustré en figures 9 et 10, le module optique L,R, est emmanché sur la portion 14 de l'arbre 13 dépassant de la branche transversale 2a. La branche transversale 2a de la platine forme un palier de la platine, sur lequel le module peut tourner en rotation autour de l'arbre 13 de l'élément d'appui 10. La rotation se fait par rapport à la platine. Ainsi l'arbre 13 outre qu'il forme l'arbre transmettant le poids de la platine à la surface d'appui 11 et qu'il est un élément de l'amortisseur 6, il est également l'arbre permettant la rotation du module par rapport à la platine. Ce mode de réalisation est compact et économique en terme de nombre de pièces. Cela permet de simplifier l'intégration de l'invention avec un module permettant un suivi dans les virages, encore appelé module DBL (pour l'anglais « Dynamic Bending Light »).

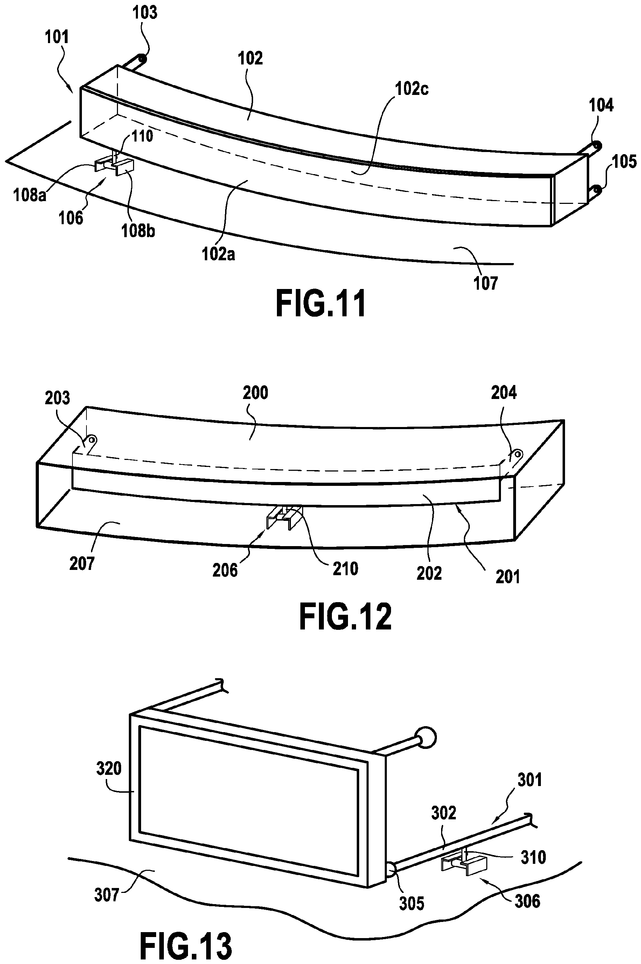

Mais l'invention peut également s'appliquer à un boîtier 102 d'un dispositif lumineux, notamment un feu stop surélevé, tel qu'illustré en figure 11. Le boîtier 102 est fermé d'une glace transparente 102c, et définissant ainsi une chambre. La chambre renferme les sources lumineuses et les moyens optiques permettant de générer le faisceau de feu stop. Le boîtier comprend également un élément d'appui 110 selon l'invention, fixé sur le fond du boîtier 102a et à l'extérieur de la chambre.

L'ensemble des caractéristiques de l'invention peut s'appliquer à ce mode de réalisation. Néanmoins pour simplifier la réalisation de ce boîtier, il est préférable que l'arbre de l'élément d'appui ne traverse pas le fond du boitier. Cela permet de ne pas avoir à gérer l'étanchéité à ce niveau. On peut par exemple prévoir une branche extérieure à la chambre, portée par le boîtier et à l'intérieur de laquelle coulisse l'arbre, ou encore un système du type corps de cylindre et piston.

Dans ce mode de réalisation, la barre transversale de l'élément d'appui 110 coopère avec des rails 108a et 108b portés par un élément 107 de carrosserie ou de garniture de celle-ci. Il est ainsi réalisé un amortisseur 106 entre le fond du boîtier 102a du feu stop surélevé et la carrosserie du véhicule. Le boîtier 102, l'élément d'appui 110 et l'amortisseur 106 forment ainsi une réalisation d'une pièce selon l'invention.

Cela permet d'amortir les variations de charge, notamment sur les extrémités du feu stop surélevé qui présente une longueur importante, parfois un quart à la moitié de la largeur de la vitre arrière du véhicule. On évite ainsi une usure trop rapide des fixations 103, 104 et 105 de ce feu.

L'élément d'appui 110 reste mobile par rapport au support 107. Cette mobilité est nécessaire, car du fait de sa longueur, la fixation du feu stop surélevé implique des ajustements sur chacun des points de fixation 103, 104 et 105. Le fait de privilégier la direction de mobilité permet de favoriser le positionnement. De plus, cette direction privilégiée, lorsqu'orientée dans le sens longitudinal, permet de conserver l'orientation du feu.

Tel qu'illustré en figure 12, l'invention peut également s'appliquer à un écran 202 fait d'un matériau transparent et/ou translucide. Ceci est d'autant plus avantageux lorsque celui-ci est lourd ou très long. C'est par exemple le cas dans un feu stop surélevé. Dans la figure 12, le feu stop surélevé comprend un boîtier 200, fermé par une glace de fermeture, non représentée. Une chambre est ainsi définie. A l'intérieur de celle-ci est située au moins une source lumineuse et un écran 202, fixé au boîtier par des points de fixation 203 et 204. Un élément d'appui 210 permet de supporter le poids de cet écran, en appui sur le fond du boîtier 207 et à l'intérieur de la chambre. Conçu comme celui des modes de réalisation précédents, l'élément d'appui est associé à un amortisseur 206, permettant d'amortir le mouvement rapprochant ou écartant l'écran du fond du boîtier 207. L'écran 202, l'élément d'appui 210 et l'amortisseur 206 forment ainsi une réalisation d'une pièce selon l'invention.

La présence de rails sur ce fond de boîtier 207 va permettre, selon les principes de l'invention de guider le déplacement de la surface d'appui selon au moins une direction privilégiée.

Les modes de réalisation des figures 11 et 12 peuvent se combiner.

Selon un autre mode de réalisation illustré en figure 13, l'invention peut s'appliquer à une tige de réglage fortement déportée dans un boîtier. La figure 13 représente l'intérieur d'un projecteur comprenant :
- un boîtier 307,
- une platine 340 de support de module optique,
- une pièce 301 selon l'invention, dans laquelle ledit corps de pièce est une tige de réglage 302 comprenant à une extrémité un point de fixation 305 à ladite platine 340, et à l'autre un point de fixation (non représenté) au boîtier 307 du dispositif lumineux.

Cette tige est fortement déportée du fait de la profondeur du boîtier. A l'arrière de ce dernier des moyens d'actionnement de la tige 302 depuis l'extérieur sont prévus. Du fait de sa longueur, la tige peut également être soumise à de forts débattements et vibrations. Cette tige 302 doit également pouvoir se déplacer selon la direction du réglage, ici vers l'avant. La tige 302 est équipée d'un élément d'appui 310 et d'un amortisseur 306 pour former une pièce selon l'invention.

La tige de réglage 302 est ainsi en appui sur le fond de boîtier 307, via sa surface d'appui. Les rails sont agencés selon la direction de réglage permettant ainsi le déplacement de la tige pour le réglage. L'amortisseur 306 amortit le mouvement rapprochant ou écartant la tige 302 du fond du boîtier 307.

L'élément d'appui et l'amortisseur sont placés là ou les charges sont les plus importantes, par exemple vers le milieu de la tige et/ou vers la platine.

Ce mode de réalisation peut être combiné à celui des figures 9 et 10.

L'invention est donc particulièrement avantageuse pour amortir les vibrations d'une pièce de dispositif lumineux, que ce soit une pièce à l'intérieur de celui-ci ou son boîtier par rapport au véhicule. C'est en particulier avantageux lorsque l'élément d'appui doit avoir un jeu dans une pièce de guidage complémentaire.

Ainsi d'une manière générale l'invention couvre un dispositif lumineux de véhicule automobile comprenant une pièce ou un ensemble selon l'invention. Ces dispositif lumineux peuvent être des projecteurs avant, des feux arrière surélevés, des dispositif d'illumination de l'intérieur de l'habitacle, tel que des plafonniers.

## Revendications

1. Pièce (1 ; 101 ; 201 ; 301) de dispositif lumineux de véhicule comprenant :
- un corps de pièce (2 ; 102 ; 202 ; 302) comprenant au moins un moyen de fixation (3, 4, 5 ; 103, 104, 105 ; 203, 204 ; 305) de ladite pièce sur un élément de véhicule,
- un élément d'appui (10 ; 110 ; 210 ; 310) solidaire dudit corps (2 ; 102 ; 202 ; 302), distinct du moyen de fixation (3, 4, 5; 103, 104, 105 ; 203, 204), et comprenant une surface d'appui (11), ladite pièce (1) étant destinée à s'appuyer sur une surface (7, 107, 207, 307) avec ladite surface d'appui (11) lorsqu'elle est fixée par son moyen de fixation (3, 4, 5 ; 103, 104, 105 ; 203, 204 ; 305), et ledit élément d'appui et ledit corps étant agencés de manière à ce que ladite surface d'appui soit mobile par rapport audit corps,
- un amortisseur (6 ; 106 ; 206 ; 306) agencé de manière à pouvoir amortir un mouvement dudit corps, ce mouvement dudit corps tendant à le rapprocher ou à l'écarter de ladite surface d'appui, ledit amortisseur (6; 106; 206; 306) comprenant au moins un moyen élastique (18) apte à se déformer lorsque ledit corps (2 ; 102 ; 202 ; 302) tend à se rapprocher ou s'écarter de ladite surface d'appui (11),
**caractérisé en ce que** ledit amortisseur (6 ; 106 ; 206 ; 306) comprend deux éléments glissant l'un dans l'autre, l'un (2a) solidaire du corps (2 ; 102 ; 202 ; 302) et l'autre (13) solidaire de l'élément d'appui (10), le moyen élastique (18) étant agencé entre deux parties de ces éléments (2a et 13) de manière à se déformer par le déplacement de ces éléments l'un par rapport à l'autre, lorsque ledit corps (2 ; 102 ; 202 ; 302) tend à se rapprocher ou s'écarter de ladite surface d'appui (11), ledit élément solidaire dudit élément d'appui (10) étant un arbre (13) et l'élément solidaire dudit corps de pièce (2 ; 102 ; 202 ; 302) comprenant un orifice (2b), ledit arbre traversant ledit orifice (2b), ledit moyen élastique (18) étant fixé d'un côté audit arbre (13) et de l'autre audit corps de pièce de manière à se déformer lorsque ledit arbre (13) se déplace à travers l'orifice (2b).

2. Pièce selon la revendication 1, dans laquelle ladite pièce (1 ; 101 ; 201 ; 301) comprend un moyen de guidage (16) apte à guider le déplacement de ladite pièce (1 ; 101 ; 201 ; 301) selon au moins une direction privilégiée (24).

3. Pièce selon l'une des revendications précédentes, dans laquelle ledit amortisseur (6 ; 106 ; 206 ; 306) est solidaire d'un côté à la surface d'appui (11) et de l'autre audit corps de pièce (2 ; 102 ; 202 ; 302).

4. Pièce selon l'une des revendications précédentes, dans laquelle le moyen élastique est un ressort (18).

5. Pièce selon l'une des revendications précédentes, dans laquelle ledit élément d'appui (10) comprend ledit arbre (13), ce dernier étant relié à ladite surface d'appui (11) et au corps de pièce (2 ; 102 ; 202 ; 302).

6. Pièce selon l'une des revendications précédentes, dans laquelle l'orifice (2b) est formé sur une partie (2a) du corps de pièce (2 ; 102 ; 202 ; 302).

7. Pièce selon l'une quelconque des revendications précédentes, dans laquelle l'élément d'appui (10 ; 110 ; 210 ; 310) comprend une portion transversale (16) portant la surface d'appui (11) et fixée à une extrémité de l'arbre (13), la portion transversale dépassant de chaque côté de l'arbre de manière à être apte à coopérer avec un rail ou une glissière.

8. Pièce selon la revendication 7, dans laquelle la portion transversale (16) est cylindrique, l'axe du cylindre étant perpendiculaire à celui de l'arbre (13).

9. Pièce selon l'une des revendications 7 à 8, la portion transversale (16) comprenant deux éléments glissant l'un (32) dans l'autre (37), l'un (37) relié à la portion transversale (16) et l'autre (32) étant libre, un moyen élastique supplémentaire (34) étant agencé entre deux parties de ces éléments (32 et 37) de manière à se déformer par le déplacement de ces éléments l'un par rapport à l'autre.

10. Pièce selon l'une des revendications 7 à 9, dans laquelle la portion transversale comprend :
- un manchon (36, 37) présentant un orifice cylindrique transversal,
- un coulisseau (32) coulissant à l'intérieur dudit manchon,
- une tête (30) fixé à l'extrémité du coulisseau (32) et à l'extérieur du manchon,
- un moyen élastique supplémentaire (34) relié d'un côté à ladite tête et de l'autre au manchon.

11. Pièce selon l'une des revendications précédentes, dans laquelle ledit corps de pièce est un écran (202) fait d'un matériau transparent et/ou translucide.

12. Pièce selon l'une des revendications 1 à 10, ledit corps de pièce étant une platine (2) de support d'au moins un module optique (L, R).

13. Ensemble comprenant au moins un module optique (L, R) monté sur une pièce (1) selon l'une des revendications 1 à 10, ledit corps de pièce étant une platine de support (2) du module optique, dans lequel :
- l'élément solidaire dudit corps de pièce (2) et comprenant un orifice (2b) est un palier de la platine,
- l'arbre (13) présente une première extrémité reliée à la surface d'appui (11) et une seconde extrémité (14), les extrémités étant situées de part et d'autre de l'orifice (2b), et
- ledit module optique est monté en rotation sur la seconde extrémité dudit arbre (13), de manière à ce que le module optique (L, R) puisse tourner autour dudit arbre (13) par rapport à la platine (2).

14. Dispositif lumineux comprenant :
- un boîtier (200) fermé d'une glace transparente, et définissant ainsi une chambre,
- une pièce (1, 201) selon l'une des revendications 1 à 12, ou un ensemble selon la revendication 13, à l'intérieur de ladite chambre, ladite pièce (1 ; 201 comprenant un moyen de guidage (16, 206) apte à guider le déplacement de ladite pièce (1 ; 201) selon au moins une direction privilégiée (24), dans lequel le boîtier comprend un moyen de guidage complémentaire (8a, 8b) du moyen de guidage de ladite pièce, et agencé de manière à permettre le déplacement de ladite pièce (1; 201) selon au moins la direction privilégiée (24).

15. Dispositif lumineux selon la revendication précédente, dans lequel le moyen de guidage complémentaire est une glissière (8a, 8b) à l'intérieur de laquelle le moyen de guidage de ladite pièce est monté et y est apte à coulisser selon la direction privilégiée.

16. Pièce selon l'une des revendications 1 à 10, dans laquelle ledit corps de pièce est un boîtier (102) d'un dispositif lumineux de véhicule, notamment un feu stop surélevé, le boîtier étant destiné à être fermé d'une glace transparente (102c) pour définir ainsi une chambre, ledit élément d'appui (110) étant à l'extérieur de la chambre.

17. Dispositif lumineux comprenant :
- un boîtier (307),
- une platine (320) de support de module optique,
- une pièce selon l'une des revendications 1 à 10, dans laquelle ledit corps de pièce est une tige de réglage (302) comprenant à une extrémité un point de fixation (305) à ladite platine (320) et à l'autre un point de fixation au boîtier du dispositif lumineux,
- l'élément d'appui (310) étant solidaire de ladite tige de réglage (302) et la surface d'appui s'appuyant directement ou indirectement contre une paroi du boîtier.

## Patentansprüche

1. Fahrzeugleuchtenvorrichtungsteil (1; 101; 201; 301), das Folgendes umfasst:
- einen Teilkörper (2; 102; 202; 302), der wenigstens ein Mittel (3, 4, 5; 103, 104, 105; 203, 204) für die Befestigung des Teils an einem Fahrzeugelement enthält,
- ein Abstützelement (10; 110; 210; 310), das mit dem Körper (2; 102; 202; 302) fest verbunden ist und von dem Befestigungsmittel (3, 4, 5; 103, 104, 105; 203, 204; 305) verschieden ist und eine Abstützoberfläche (11) aufweist, wobei das Teil (1) dazu bestimmt ist, sich mit der Abstützoberfläche (11) auf einer Oberfläche (7, 107, 207, 307) abzustützen, wenn es durch sein Befestigungsmittel (3, 4, 5; 103, 104, 105; 203, 204; 305) befestigt ist, und das Abstützelement und der Körper in der Weise ausgelegt sind, dass die Abstützoberfläche in Bezug auf den Körper beweglich ist,
- einen Dämpfer (6; 106; 206; 306), der dazu ausgelegt ist, eine Bewegung des Körpers dämpfen zu können, wobei diese Bewegung des Körpers bestrebt ist, ihn an die Abstützoberfläche anzunähern oder hiervon zu entfernen, wobei der Dämpfer (6; 106; 206; 306) wenigstens ein elastisches Mittel (18) aufweist, das sich verformen kann, wenn der Körper (2; 102; 202; 302) bestrebt ist, sich an die Abstützoberfläche (11) anzunähern oder sich hiervon zu entfernen, **dadurch gekennzeichnet, dass** der Dämpfer (6; 106; 206; 306) zwei ineinander gleitende Elemente umfasst, wovon eines (2a) mit dem Körper (2; 102; 202; 302) fest verbunden ist und das andere (13) mit dem Abstützelement (10) fest verbunden ist, wobei das elastische Mittel (18) zwischen zwei Abschnitten dieser Elemente (2a und 13) in der Weise angeordnet ist, dass es sich durch Verlagerung dieser Elemente relativ zueinander verformt, wenn der Körper (2; 102; 202; 302) bestrebt ist, sich an die Abstützoberfläche (11) anzunähern oder sich hiervon zu entfernen, wobei das mit dem Abstützelement (10) fest verbundene Element eine Welle (13) ist und das mit dem Teilkörper (2; 102; 202; 302) fest verbundene Element eine Öffnung (2b) aufweist, wobei die Welle durch die Öffnung (2b) verläuft, wobei das elastische Mittel (18) auf einer Seite an der Welle (13) befestigt ist und auf der anderen Seite an dem Teilkörper befestigt ist, derart, dass es sich verformt, wenn sich die Welle (13) durch die Öffnung (2b) hindurch verlagert.

2. Teil nach Anspruch 1, wobei das Teil (1; 101; 201; 301) ein Führungsmittel (16) umfasst, das die Verlagerung des Teils (1; 101; 201; 301) längs wenigstens einer bevorzugten Richtung (24) führt.

3. Teil nach einem der vorhergehenden Ansprüche, wobei der Dämpfer (6; 106; 206; 306) auf einer Seite mit der Abstützoberfläche (11) fest verbunden ist und auf der anderen Seite mit dem Teilkörper (2; 102; 202; 302) fest verbunden ist.

4. Teil nach einem der vorhergehenden Ansprüche, wobei das elastische Mittel eine Feder (18) ist.

5. Teil nach einem der vorhergehenden Ansprüche, wobei das Abstützelement (10) die Welle (13) umfasst, wobei diese Letztere mit der Abstützoberfläche (11) und mit dem Teilkörper (2; 102; 202; 302) verbunden ist.

6. Teil nach einem der vorhergehenden Ansprüche, wobei die Öffnung (2b) durch einen Abschnitt (2a) des Teilkörpers (2; 102; 202; 302) gebildet ist.

7. Teil nach einem der vorhergehenden Ansprüche, wobei das Abstützelement (10; 110; 210; 310) einen transversalen Abschnitt (16) aufweist, der die Abstützoberfläche (11) trägt und an einem Ende der Welle (13) befestigt ist, wobei der transversale Abschnitt jede Seite der Welle überragt, derart, dass er mit einer Schiene oder einer Gleitschiene zusammenwirken kann.

8. Teil nach Anspruch 7, wobei der transversale Abschnitt (16) zylindrisch ist, wobei die Achse des Zylinders zu jener der Welle (13) senkrecht ist.

9. Teil nach einem der Ansprüche 7 bis 8, wobei der transversale Abschnitt (16) zwei Elemente umfasst, wovon eines (32) im anderen (37) gleitet, wobei ein Element (37) mit dem transversalen Abschnitt (16) verbunden ist und das andere Element (32) frei ist, wobei ein zusätzliches elastisches Mittel (34) zwischen zwei Abschnitten dieser Elemente (32 und 37) angeordnet ist, derart, dass es sich durch die Verlagerung dieser Elemente relativ zueinander verformt.

10. Teil nach einem der Ansprüche 7 bis 9, wobei der transversale Abschnitt Folgendes umfasst:
- eine Muffe (36, 37), die eine transversale zylindrische Öffnung aufweist,
- einen Gleiter (32), der in der Muffe gleitet,
- einen Kopf (30), der an dem Ende des Gleiters (32) und außerhalb der Muffe befestigt ist,
- ein zusätzliches elastisches Mittel (34), das auf einer Seite mit dem Kopf und auf der anderen Seite mit der Muffe verbunden ist.

11. Teil nach einem der vorhergehenden Ansprüche, wobei der Teilkörper ein Schirm (202) ist, der aus einem lichtdurchlässigen und/oder durchsichtigen Material hergestellt ist.

12. Teil nach einem der Ansprüche 1 bis 10, wobei der Teilkörper eine Platine (2) zum Tragen wenigstens eines optischen Moduls (L, R) ist.

13. Anordnung, die wenigstens ein optisches Modul (L, R) umfasst, das auf einem Teil (1) nach einem der Ansprüche 1 bis 10 montiert ist, wobei der Teilkörper eine Platine (2) zum Tragen des optischen Moduls ist, wobei:
- das mit dem Teilkörper (2) fest verbundene Element, das eine Öffnung (2b) aufweist, ein Lager der Platine ist,
- die Welle (13) ein erstes Ende, das mit der Abstützoberfläche (11) verbunden ist, und ein zweites Ende (14) aufweist, wobei sich die Enden beiderseits der Öffnung (2b) befinden, und
- das optische Modul an dem zweiten Ende der Welle (13) drehbar montiert ist, derart, dass sich dieses optische Modul (L, R) in Bezug auf die Platine (2) um die Welle (13) drehen kann.

14. Leuchtenvorrichtung, die Folgendes umfasst:
- ein Gehäuse (200), das durch eine lichtdurchlässige Scheibe verschlossen ist und dadurch eine Kammer definiert,
- ein Teil (1, 201) nach einem der Ansprüche 1 bis 12 oder eine Anordnung nach Anspruch 13 in der Kammer, wobei das Teil (1; 201) ein Führungsmittel (16, 206) umfasst, das die Verlagerung des Teils (1; 201) längs wenigstens einer bevorzugten Richtung (24) führen kann, wobei das Gehäuse ein komplementäres Führungsmittel (8a, 8b) des Führungsmittels des Teils umfasst und dafür ausgelegt ist, die Verlagerung des Teils (1; 201) wenigstens längs der bevorzugten Richtung (24) zu erlauben.

15. Leuchtenvorrichtung nach dem vorhergehenden Anspruch, wobei das komplementäre Führungsmittel eine Gleitschiene (8a, 8b) ist, in der das Führungsmittel des Teils montiert ist und hier längs der bevorzugten Richtung gleiten kann.

16. Teil nach einem der Ansprüche 1 bis 10, wobei der Teilkörper ein Gehäuse (102) einer Fahrzeugleuchtenvorrichtung, insbesondere eines oberen Bremslichts ist, wobei das Gehäuse dazu bestimmt ist, durch eine lichtdurchlässige Scheibe (102c) verschlossen zu sein, um somit eine Kammer zu bilden, wobei sich das Abstützelement (110) außerhalb der Kammer befindet.

17. Leuchtenvorrichtung, die Folgendes umfasst:
- ein Gehäuse (307),
- eine Platine (320) zum Tragen des optischen Moduls,
- ein Teil nach einem der Ansprüche 1 bis 10, wobei der Teilkörper ein Regulierungsstift (302) ist, der an einem Ende einen Punkt (305) für die Befestigung an der Platine (320) aufweist und auf der anderen Seite einen Punkt für die Befestigung an dem Gehäuse der Leuchtenvorrichtung aufweist,
- wobei das Abstützelement (310) mit dem Regulierungsstift (302) fest verbunden ist und wobei sich die Abstützoberfläche direkt oder indirekt an einer Wand des Gehäuses abstützt.

## Claims

1. Vehicle lighting device component (1; 101; 201; 301) comprising:
- a component body (2; 102; 202; 302) comprising at least one fastening means (3, 4, 5; 103, 104, 105; 203, 204; 305) for fastening said component to a vehicle element,
- a bearing element (10; 110; 210; 310) secured to said body (2; 102; 202; 302), separate from the fastening means (3, 4, 5; 103, 104, 105; 203, 204), and comprising a bearing surface (11), said component (1) being intended to bear against a surface (7, 107, 207, 307) with said bearing surface (11) when it is fastened by way of its fastening means (3, 4, 5; 103, 104, 105; 203, 204; 305), and said bearing element and said body being designed such that said bearing surface is able to move with respect to said body,
- a damper (6; 106; 206; 306) designed so as to be able to damp a movement of said body, this movement of said body tending to move it toward or away from said bearing surface, said damper (6; 106; 206; 306) comprising at least one elastic means (18) that is able to deform when said body (2; 102; 202; 302) tends to move toward or away from said bearing surface (11), **characterized in that** said damper (6; 106; 206; 306) comprises two elements that slide one in the other, one (2a) being secured to the body (2; 102; 202; 302) and the other (13) being secured to the bearing element (10), the elastic means (18) being arranged between two parts of these elements (2a and 13) so as to deform as a result of the movement of these elements with respect to one another when said body (2; 102; 202; 302) tends to move toward or away from said bearing surface (11), said element secured to said bearing element (10) being a shaft (13) and the element secured to said component body (2; 102; 202; 302) comprising an orifice (2b), said shaft passing through said orifice (2b), said elastic means (18) being fastened on one side to said shaft (13) and on the other to said component body so as to deform when said shaft (13) moves through the orifice (2b).

2. Component according to Claim 1, wherein said component (1; 101; 201; 301) comprises a guide means (16) that is able to guide the movement of said component (1; 101; 201; 301) in at least one preferred direction (24).

3. Component according to either of the preceding claims, wherein said damper (6; 106; 206; 306) is secured on one side to the bearing surface (11) and on the other to said component body (2; 102; 202; 302).

4. Component according to one of the preceding claims, wherein the elastic means is a spring (18).

5. Component according to one of the preceding claims, wherein said bearing element (10) comprises said shaft (13), the latter being connected to said bearing surface (11) and to said component body (2; 102; 202; 302).

6. Component according to one of the preceding claims, wherein the orifice (2b) is formed in a part (2a) of the component body (2; 102; 202; 302).

7. Component according to any one of the preceding claims, wherein the bearing element (10; 110; 210; 310) comprises a transverse portion (16) that bears the bearing surface (11) and is fastened to one end of the shaft (13), the transverse portion protruding from each side of the shaft so as to be able to engage with a rail or slideway.

8. Component according to Claim 7, wherein the transverse portion (16) is cylindrical, the axis of the cylinder being perpendicular to that of the shaft (13).

9. Component according to either of Claims 7 and 8, wherein the transverse portion (16) comprises two elements which slide one (32) in the other (37), one (37) being connected to the transverse portion (16) and the other (32) being free, an additional elastic means (34) being arranged between two parts of these elements (32 and 37) so as to deform as a result of the movement of these elements with respect to one another.

10. Component according to one of Claims 7 to 9, wherein the transverse portion comprises:
- a sleeve (36, 37) having a transverse cylindrical orifice,
- a slide (32) sliding inside said sleeve,
- a head (30) fastened to the end of the slide (32) and outside the sleeve,
- an additional elastic means (34) connected on one side to said head and on the other to the sleeve.

11. Component according to one of the preceding claims, wherein said component body is a screen (202) made of a transparent and/or translucent material.

12. Component according to one of Claims 1 to 10, wherein said component body is a mounting plate (2) for supporting at least one optical module (L, R).

13. Assembly comprising at least one optical module (L, R) mounted on a component (1) according to one of Claims 1 to 10, said component body being a mounting plate (2) for supporting the optical module, wherein:
- the element secured to said component body (2) and comprising an orifice (2b) is a bearing for the mounting plate,
- the shaft (13) has a first end connected to the bearing surface (11) and a second end (14), the ends being located on either side of the orifice (2b), and
- said optical module is mounted so as to rotate on the second end of said shaft (13) such that the optical module (L, R) can turn about said shaft (13) with respect to the mounting plate (2).

14. Lighting device comprising:
- a housing (200) closed by a transparent outer lens and thus defining a chamber,
- a component (1, 201) according to one of Claims 1 to 12, or an assembly according to Claim 13, inside said chamber, said component (1; 201) comprising a guide means (16, 206) that is able to guide the movement of said component (1; 201) in at least one preferred direction (24),
wherein the housing comprises a guide means (8a, 8b) which is complementary to the guide means for said component and is designed to allow said component (1; 201) to move in at least the preferred direction (24) .

15. Lighting device according to the preceding claim, wherein the complementary guide means is a slideway (8a, 8b) inside which the guide means for said component is mounted and is able to slide in the preferred direction therein.

16. Component according to one of Claims 1 to 10, wherein said component body is a housing (102) for a vehicle lighting device, in particular a high mounted stop light, the housing being intended to be closed by a transparent outer lens (102c) in order thus to define a chamber, said bearing element (110) being outside the chamber.

17. Lighting device comprising:
- a housing (307),
- a mounting plate (320) for supporting an optical module,
- a component according to one of Claims 1 to 10, in which said component body is an adjusting rod (302) comprising at one end a fastening point (305) for fastening to said mounting plate (320) and at the other a fastening point for fastening to the housing of the lighting device,
- the bearing element (310) being secured to said adjusting rod (302) and the bearing surface bearing directly or indirectly against a wall of the housing.
